# EUROPÄISCHE PATENTSCHRIFT

(11) **EP 3 926 159 B1**
(45) Veröffentlichungstag und Bekanntmachung des Hinweises auf die Patenterteilung: **04.06.2025**
(21) Anmeldenummer: 21180174.1
(22) Anmeldetag: 17.06.2021
(51) Int. Cl.: F02M 21/02, F16L 9/18, G01M 3/28

(54) **GASVERSORGUNGSSYSTEM EINES GASMOTORS ODER DUAL-FUEL-MOTORS UND VERFAHREN ZUM BETREIBEN DESSELBEN**
GAS SUPPLY SYSTEM OF A GAS ENGINE OR DUAL-FUEL MOTOR AND METHOD OF OPERATING THE SAME
SYSTÈME D'ALIMENTATION EN GAZ D'UN MOTEUR À GAZ OU D'UN MOTEUR À BICARBURANT ET SON PROCÉDÉ DE FONCTIONNEMENT

(30) Priorität: 19.06.2020 DE 102020116222
(43) Veröffentlichungstag der Anmeldung: 22.12.2021
(73) Patentinhaber: MAN Energy Solutions SE, 86153 Augsburg (DE)
(72) Erfinder: Dirumdam, Björn, 86679 Ellgau (DE); Lindermayr, Thomas, 86568 Motzenhofen (DE)

(56) Entgegenhaltungen:
- EP-A1- 2 818 674
- EP-A1- 2 952 727
- DE-B3- 102015 214 563

## Beschreibung

Die Erfindung betrifft ein Gasversorgungs- und Inertisierungssystem eines Gasmotors oder Dual-Fuel-Motors. Ferner betrifft die Erfindung ein Verfahren zum Betreiben des Gasversorgungssystems.

In einem Gasmotor sowie in einem Dual-Fuel-Motor wird in einem Gaskraftstoffbetrieb als Kraftstoff ein gasförmiger Kraftstoff verbrannt. Über ein Gasversorgungssystem kann der jeweilige Motor mit dem gasförmigen Kraftstoff versorgt werden. Ein solches Gasversorgungssystem verfügt über einen Tank zur Bereithaltung von gasförmigem Kraftstoff sowie über eine Gasregelstation zur Versorgung des Motors mit gasförmigem Kraftstoff konstanten Gasdrucks in Abhängigkeit einer angeforderten Motorleistung, sowie über eine sich von der Gasregelstation zu den Zylindern des Motors erstreckende, doppelwandige Gasleitung.

Die doppelwandige Gasleitung des Gasversorgungs- und Inertisierungssystems verfügt über ein in Richtung auf den Motor durchströmtes Innenrohr zur Gasversorgung des Motors. Ferner verfügt die doppelwandige Gasleitung des Gasversorgungssystems über ein das Innenrohr zumindest abschnittsweise umgebendes, in Richtung auf die Gasregelstation durchströmtes Außenrohr zur Abführung einer potentiellen Gasleckage mit Hilfe von Spülluft. Innenrohr und Außenrohr definieren einen Leckage-Strömungskanal, der in Gegenstromrichtung zum Innenrohr von der Spülluft durchströmt ist.

Die Gasregelstation eines solchen Gasversorgungssystems wird auch als GVU-Raum bezeichnet.

In einem Spülbetrieb des Gasmotors und insbesondere dann, wenn ein Dual-Fuel-Motor vom Gaskraftstoffbetrieb in einen Flüssigkraftstoffbetrieb umgeschaltet wird, ist es erforderlich, die bislang den gasförmigen Kraftstoff führenden Leitungen mit Inertgas zu spülen. Hierzu ist bei aus der Praxis bekannten Motoren eine aufwendige Verrohrung von Inertgasspülleitungen im Bereich des Motors erforderlich. Dies ist von Nachteil.

EP 2 952 727 A1 offenbart ein Gasversorgungssystem eines Dual-Fuel-Motors. Zu Zylindern des Dual-Fuel-Motors erstreckt sich eine doppelwandige Leitung, die ein Innenrohr und ein das Innenrohr zumindest abschnittsweise umgebendes Außenrohr aufweist. Über das Innenrohr der doppelwandigen Leitung kann Kraftstoff in Richtung die Zylinder geführt werden. Das dort offenbarte Gasversorgungssystem weist ferner eine Inertgasspülleitung und ein der Inertgasspülleitung zugeordnetes Absperrventil auf, wobei bei geöffnetem Absperrventil über die Inertgasspülleitung und das Außenrohr der doppelwandigen Gasleitung Inertgas in Richtung die Zylinder geführt werden kann.

EP 2 818 674 A1 und DE 10 2015 214 563 B3 offenbareren weiteren Stand der Technik.

Es besteht daher Bedarf an einem Gasversorgungssystem eines Gasmotors oder eines Dual-Fuel-Motors, bei welchem es möglich ist, den gasförmigen Kraftstoff führende Rohre mit Inertgas zu spülen, und zwar bei kleinem konstruktivem Aufwand, ohne die Notwendigkeit einer aufwendigen Verrohrung einer Inertgasspülleitung im Bereich des Motors.

Hiervon ausgehend liegt der vorliegenden Erfindung die Aufgabe zugrunde, ein neuartiges Gasversorgungssystem eines Gasmotors oder Dual-Fuel-Motors und Verfahren zum Betreiben desselben zu schaffen.

Nach der Erfindung wird die Aufgabe durch ein Gasversorgungssystem eines Gasmotors oder Dual-Fuel-Motors nach Anspruch 1 gelöst.

Das erfindungsgemäße Gasversorgungssystem weist eine Gasregelstation auf, die der Versorgung des Motors in einem Gaskraftstoffbetrieb desselben mit einem gasförmigen Kraftstoff konstanten Gasdrucks in Abhängigkeit einer angeforderten Motorleistung dient.

Das erfindungsgemäße Gasversorgungssystem weist ferner eine sich von der Gasregelstation zu den Zylindern des Motors erstreckende, doppelwandige Gasleitung auf, die ein Innenrohr und ein das Innenrohr zumindest abschnittsweise umgebendes Außenrohr aufweist, wobei im Gaskraftstoffbetrieb das Innenrohr der doppelwandigen Gasleitung ausgehend von einem gasregelstationsseitigen Ende der doppelwandigen Gasleitung in Richtung auf ein motorseitiges Ende der doppelwandigen Gasleitung von dem gasförmigen Kraftstoff durchströmbar ist.

Im Bereich der Gasregelstation erstreckt sich zum gasregelstationsseitigen Ende der doppelwandigen Gasleitung eine Gasleitung, in die mindestens ein Gasabsperrventil integriert ist, wobei diese Gasleitung in das Innenrohr der doppelwandigen Gasleitung übergeht oder dasselbe bereitstellt. Im Bereich der Gasregelstation zweigt von der Gasleitung zwischen dem mindestens einen Gasabsperrventil und dem gasregelstationsseitigen Ende der doppelwandigen Gasleitung mindestens eine Entlüftungsleitung mit einem in die jeweilige Entlüftungsleitung integrierten Entlüftungsventil ab.

Das erfindungsgemäße Gasversorgungssystem weist ferner eine Inertgasspülleitung und ein der Inertgasspülleitung zugeordnetes Absperrventil auf, wobei in einem Spülbetrieb des Motors bei geöffnetem ersten Absperrventil über die Inertgasspülleitung dem Außenrohr der doppelwandigen Gasleitung an dem gasregelstationsseitigen Ende der doppelwandigen Gasleitung Inertgas zuführbar ist, welches durch das Außenrohr in Richtung auf das motorseitige Ende der doppelwandigen Gasleitung strömt, dort in das Innenrohr übertritt und über das Innenrohr zurück in Richtung auf das gasregelstationsseitigen Ende der doppelwandigen Gasleitung strömt, um dort aus derselben auszutreten, nämlich derart, dass bei geöffnetem Entlüftungsventil und geschlossenem Gasabsperrventil das am gasregelstationsseitigen Ende aus der doppelwandigen Gasleitung im Spülbetrieb des Motors austretende Inertgas über die jeweilige Entlüftungsleitung abführbar ist.

Mit der hier vorliegenden Erfindung wird ein Gasversorgungssystem vorgeschlagen, bei welchem der doppelwandigen Gasleitung, deren Innenrohr im Gaskraftstoffbetrieb von gasförmigem Kraftstoff durchströmt ist, im Spülbetrieb über das gasregelstationsseitige Ende der doppelwandigen Gasleitung Inertgas zuführbar ist, welches zunächst über das Außenrohr strömt, im Bereich des motorseitigen Endes vom Außenrohr in das Innenrohr übertritt, dann zurück über das Innenrohr in Richtung auf das gasregelstationsseitige Ende strömt, um von dort abgeleitet zu werden. Hierdurch ist es möglich, auf eine bislang erforderliche, aufwendige Verrohrung einer Inertgasspülleitung im Bereich des Motors zu verzichten.

Nach einer vorteilhaften Weiterbildung der Erfindung ist am motorseitigen Ende der doppelwandigen Gasleitung ein Ventil vorgesehen, welches im Spülbetreib des Motors einen Übertritt des Intergases vom Außenrohr der doppelwandigen Gasleitung in das Innenrohr der doppelwandigen Gasleitung zulässt. Über dieses Ventil kann sichergestellt werden, dass einerseits im Spülbetrieb des Motors der Übertritt des Inertgases vom Außenrohr in das Innenrohr möglich ist, sowie andererseits im Gasbetrieb der Übertritt des Brenngases vom Innenrohr in das Außenrohr verhindert wird. Bei diesem Ventil kann es sich zum Beispiel um ein Rückschlagventil oder auch um ein aktiv schaltbares Ventil handeln.

Nach einer vorteilhaften Weiterbildung greift an der doppelwandigen Gasleitung ein Drucksensor an, über den ein Druckabfall einer mit Inertgas befüllten doppelwandigen Gasleitung detektierbar ist. Hiermit kann einfach und zuverlässig eine Dichtheitsprüfung für die doppelwandige Gasleitung realisiert werden.

Verfahren zum Betreiben des Gasversorgungssystems sind in den Ansprüchen 6, 7 und 8 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein erfindungsgemäßes Gasversorgungssystem für einen Gasmotor oder Dual-Fuel-Motor in einem ersten Zustand,
- Fig. 2: das Gasversorgungssystem in einem zweiten Zustand, und
- Fig. 3: das Detail III der Fig. 2.

Die Erfindung betrifft ein Gasversorgungssystem eines als Gasmotor oder Dual-Fuel-Motor ausgebildeten Motors, der insbesondere auf einen Schiff zum Einsatz kommt. Des Weiteren betrifft die Erfindung ein Verfahren zum Betreiben eines solchen Gasversorgungssystems.

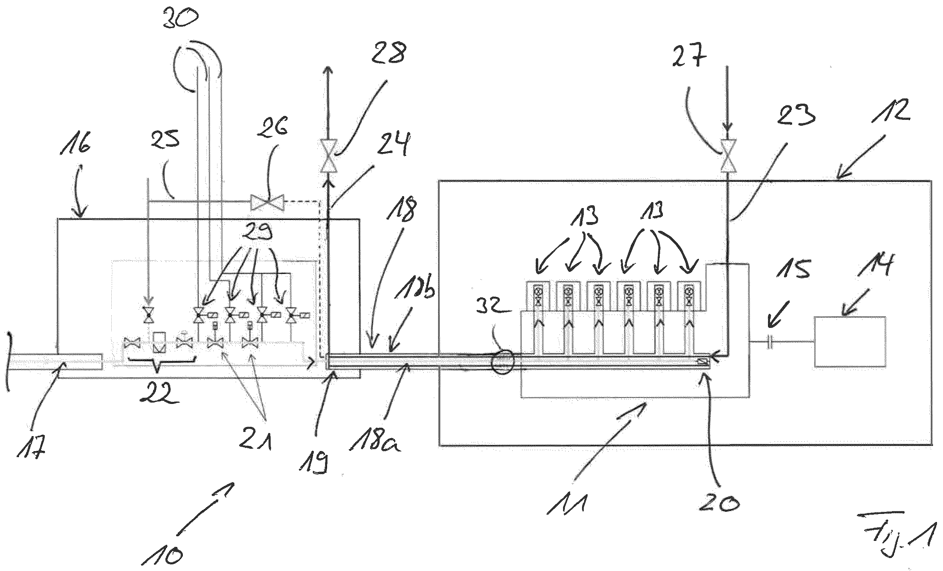

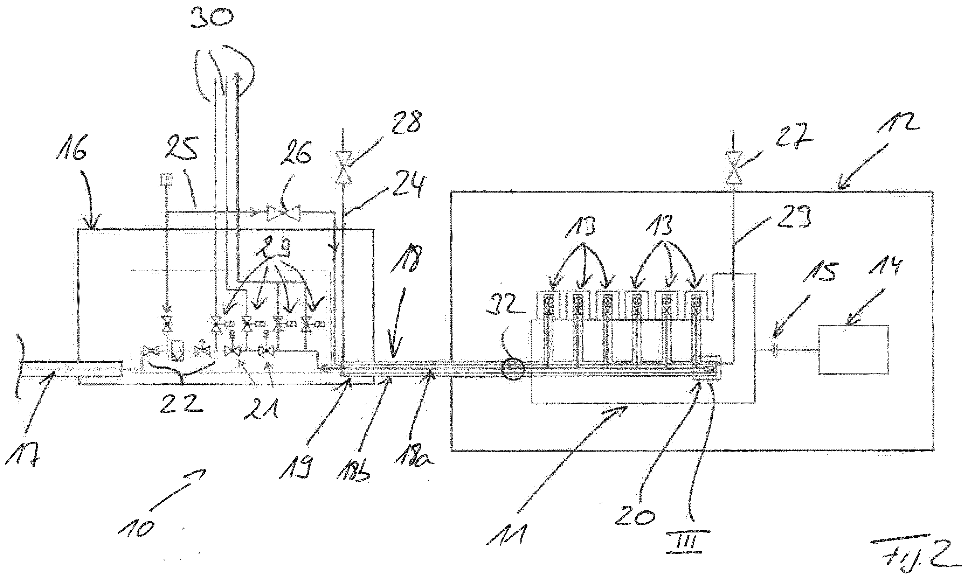

Fig. 1 und 2 zeigen ein Ausführungsbeispiel eines bevorzugten Gasversorgungssystems 10 im Sinne der hier vorliegenden Erfindung zusammen mit einem als Dual-Fuel-Motor ausgebildeten Motor 11. Der Motor 11 ist in einem Maschinenraum 12 angeordnet.

Der als Dual-Fuel-Motor oder reiner Gasmotor ausgebildete Motor 11 verfügt über mehrere Zylinder 13, in welchen im Gaskraftstoffbetrieb des Motors 11 ein gasförmiger Kraftstoff verbrannt wird. In einen Flüssigkraftstoffbetrieb kann in den Zylindern 13 des Motors 11 ein Flüssigkraftstoff, wie zum Beispiel ein Dieselkraftstoff, verbrannt werden.

Fig. 1 zeigt weiterhin einen im Maschinenraum 12 angeordneten Generator 14, der über eine Kupplung 15 an den Motor 11 gekoppelt werden kann. Der Generator 14 kann bei geschlossener Kupplung 15 von dem Motor 11 aus angetrieben werden, um zum Beispiel elektrische Energie zu erzeugen. Der Motor 11 kann auch genutzt werden, an einem anderen Abtrieb Antriebsleistung bereitzustellen, so zum Beispiel bei einem Schiff an einem Schiffspropeller.

Im Gaskraftstoffbetrieb wird den Zylindern 13 des Motors 11 der gasförmige Kraftstoff über das Gasversorgungssystem 10 bereitgestellt. Das Gasversorgungssystem 10 verfügt über einen nicht gezeigten Tank zur Bereitstellung des gasförmigen Kraftstoffs.

Ferner verfügt das Gasversorgungssystem 10 über eine Gasregelstation, die Bestandteil des voran genannten GVU-Raums 16 ist. Die Gasregelstation 16 dient der Versorgung des Motors 11 mit gasförmigem Kraftstoff, und zwar mit gasförmigem Kraftstoff konstanten Gasdrucks in Abhängigkeit einer angeforderten Motorleistung.

Fig. 1 zeigt eine Gasleitung 17, die sich ausgehend vom nicht gezeigten Tank in Richtung auf den Motor 11 erstreckt, wobei diese Gasleitung 17 zwischen der Gasregelstation 16 und dem Motor 11 Bestandteil einer doppelwandigen Gasleitung 18 ist. Im Bereich der doppelwandigen Gasleitung 18 bildet die Gasleitung 17 ein Innenrohr 18a der doppelwandigen Gasleitung 18, wobei dieses Innenrohr 18a der doppelwandigen Gasleitung 18 abschnittsweise von einem Außenrohr 18b umgeben ist.

Das Innenrohr 18a und das Außenrohr 18b der doppelwandigen Gasleitung 18 bilden voneinander getrennte Strömungskanäle aus.

Die doppelwandige Gasleitung 18 verfügt über ein gasregelstationsseitiges Ende 19 sowie über ein motorseitiges Ende 20. Im Gaskraftstoffbetrieb des Motors 11 ist die doppelwandige Gasleitung 18 ausgehend vom gasregelstationsseitigen Ende 19 in Richtung auf das motorseitige Ende 20 von gasförmigem Kraftstoff durchströmt, nämlich das Innenrohr 18a der doppelwandigen Gasleitung 18.

Fig. 1 zeigt im Bereich der Gasregelstation 16 verbaute Gasabsperrventile 21. Dann, wenn der Motor 11 im Gaskraftstoffbetrieb betrieben wird, sind diese Gasabsperrventile 21 geöffnet. In Strömungsrichtung des gasförmigen Kraftstoffs gesehen stromaufwärts der Gasabsperrventile 21 sind Baugruppen eines Druckreglers 22 gezeigt, über die der konstante Gasdruck des gasförmigen Kraftstoffs bereitgestellt werden kann. Ferner zeigt Fig. 1 im Bereich der Gasregelstation 16 verbaute Entlüftungsventile 29, die mit Entlüftungsleitungen 30 zusammenwirken.

Bei dem in Fig. 1 und 2 gezeigten Gasversorgungssystem 10 ist vorgesehen, dass im Gaskraftstoffbetrieb das Außenrohr 18b der doppelwandigen Gasleitung 18 zur Abführung einer gegebenenfalls vorhandenen Gasleckage von Spülluft durchströmt ist, und zwar ausgehend vom motorseitigen Ende 20 in Richtung auf das gasregelstationsseitige Ende 19 der doppelwandigen Gasleitung 18, sodass demnach im Gaskraftstoffbetrieb beim Gasversorgungssystem 10 der Fig. 1 und 2 das Innenrohr 18 und das Außenrohr 18b gegenläufig durchströmt sind. Die Spülluft ist dem Außenrohr 18b am motorseitigen Ende 20 der doppelwandigen Gasleitung 18 zuführbar, und zwar über eine Spülluftzuleitung 23. Die Spülluft kann am gasregelstationsseitigen Ende 19 aus der doppelwandigen Gasleitung 18 austreten und über eine Spülluftableitung 24 abgeführt werden.

Beim erfindungsgemäßen Gasversorgungssystem 10 ist vorgesehen, dass eine Inertgasspülleitung 25 vorhanden ist, und zwar mit einem der Inertgasspülleitung 25 zugeordneten ersten Absperrventil 26. Dann, wenn die Spülluftzuleitung 23 und die Spülluftableitung 24 vorhanden sind, ist der Spülluftzuleitung 23 ein zweites Absperrventil 27 und der Spülluftableitung 24 ein drittes Absperrventil 28 zugeordnet.

Im Gaskraftstoffbetrieb sind das zweite Absperrventil 27 und das dritte Absperrventil 28 beide geöffnet, das erste Absperrventil 26 ist hingegen im Gaskraftstoffbetrieb geschlossen. Dann, wenn kein Gaskraftstoffbetrieb des Motors 10 vorliegt, sondern vielmehr ein Spülbetrieb, um zum Beispiel den Dual-Fuel-Motor vom Gaskraftstoffbetrieb in den Flüssigkraftstoffbetrieb umzustellen, ist das erste Absperrventil 26 geöffnet, sodass dann über die Inertgasspülleitung 25 dem Außenrohr 18b der doppelwandigen Gasleitung 18 am gasregelstationsseitigen Ende 19 der doppelwandigen Gasleitung 18 Inertgas zuführbar ist, welches durch das Außenrohr 18b in Richtung auf das motorseitige Ende 20 der doppelwandigen Gasleitung 18 strömt, dort vom Außenrohr 18b in das Innenrohr 18a übertritt und über das Innenrohr 18a zurück in Richtung auf das gasregelstationsseitige Ende 19 der doppelwandigen Gasleitung 18 strömt, um dort aus derselben auszutreten, bzw. um dort über die Entlüftungseinrichtung 29, 30 abgeführt zu werden. Dann, wenn die Spülluftzuleitung 23 und die Spülluftableitung 24 vorhanden sind, sind dann im Spülbetrieb das zweite Absperrventil 27 und das dritte Absperrventil 28 beide geschlossen. Ebenso sind im Spülbetrieb die beiden Gasabsperrventile 21 geschlossen.

Wie oben beschrieben, sind im Bereich der Gasregelstation 16 die beiden Gasabsperrventile 21 vorhanden. Ebenso sind die mehreren Entlüftungsventile 29 vorhanden, wobei im gezeigten Ausführungsbeispiel zwei Entlüftungsventile 29 einer Entlüftungsleitung 30 zugeordnet sind, die zwischen dem oder jedem Gasabsperrventil 21 und dem gasregelstationsseitigen Ende 19 der doppelwandigen Gasleitung 18 von der Gasleitung 17 abzweigt.

Im Spülbetrieb sind, wie oben ausgeführt, die Gasabsperrventile 21 geschlossen, die Entlüftungsventile 29 hingegen, die den Entlüftungsleitungen 30 zugeordnet sind, welche zwischen den Gasabsperrventilen 21 und dem gasregelstationsseitigen Ende 19 der doppelwandigen Gasleitung 18 von der Gasleitung 17 abzweigt, sind im Spülbetrieb des Motors 11 geöffnet, sodass dann das aus dem gasregelstationsseitigen Ende der doppelwandigen Gasleitung 18, nämlich aus dem Innenrohr 18a derselben, austretende Inertgas über die Entlüftungsleitung 30 abgeführt werden kann.

Dann, wenn, wie in Fig. 1 gezeigt, der Motor 11 im Gasbetrieb betrieben wird, ist das erste Absperrventil 26 geschlossen und es wird kein Inertgas zum Motor 11 geführt. Die Gasabsperrventile 21 sind geöffnet, sodass über die doppelwandige Gasleitung 18 über das Innenrohr 18a gasförmiger Kraftstoff den Zylindern 13 des Motors 11 zugeführt werden kann.

Dann, wenn im Gaskraftstoffbetrieb das Außenrohr 18b mit Spülluft gespült wird, sind die beiden Absperrventile 27 und 28 geöffnet, sodass über die Spülluftzuleitung 23 die Spülluft am motorseitigen Ende 20 der doppelwandigen Gasleitung 18, nämlich dem Außenrohr 18b, zugeführt werden kann, und dass dann die Spülluft, die am gasregelstationsseitigen Ende 19 der doppelwandigen Gasleitung 18 aus derselben, nämlich dem Außenrohr 18b, austritt, über die Spülabluftleitung 24 abgeführt werden kann. Im Gaskraftstoffbetrieb sind die Entlüftungsventile 29 geschlossen.

Im Spülbetrieb ist das erste Absperrventil 26 geöffnet, das zweite Absperrventil 27 und das dritte Absperrventil 28 sind beide geschlossen. Auch sind die Gasabsperrventile 21 geschlossen. Zumindest eines der Entlüftungsventile 29, welches den Entlüftungsleitungen 30 zugeordnet ist, die zwischen den Gasabsperrventilen 21 und dem gasregelstationsseitigen Ende 19 der doppelwandigen Gasleitung 18a von der Gasleitung 17 abzweigt, ist geöffnet.

So kann dann im Spülbetrieb Inertgas bei geöffnetem Absperrventil 26 dem Außenrohr 18b über das gasregelstationsseitige Ende 19 der doppelwandigen Gasleitung 18 zugeführt werden, wobei das Inertgas dann über das Außenrohr 18b in Richtung auf das motorseitige Ende 20 der doppelwandigen Gasleitung 18 strömt und dort in das Innenrohr 18a übertritt. Im Innenrohr 18a strömt das Inertgas vom motorseitigen Ende 20 zurück auf das gasregelstationsseitige Ende 19 der doppelwandigen Gasleitung 18, tritt dort aus der doppelwandigen Gasleitung 18 aus und wird über die Entlüftungsleitung 30, die in Strömungsrichtung des Inertgases gesehen stromaufwärts der Gasabsperrventile 21 von der Gasleitung 17 abzweigt, abgeführt.

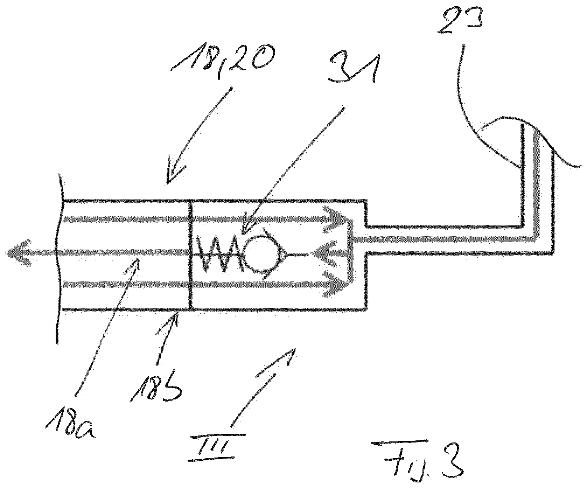

Wie am besten dem Detail III der Fig. 3 entnommen werden kann, ist am motorseitigen Ende 20 der doppelwandigen Gasleitung 18 ein Ventil 31 vorgesehen, welches im Spülbetrieb den Übertritt des Inertgases vom Außenrohr 18b der doppelwandigen Gasleitung 18 in das Innenrohr 18a der doppelwandigen Gasleitung zulässt. Bei diesem Ventil 31 handelt es sich im gezeigten Ausführungsbeispiel um ein Rückschlagventil. Dann, wenn im Gaskraftstoffbetrieb das Innenrohr 18a in entgegengesetzte Richtung vom gasförmigen Kraftstoff durchströmt ist, ist das Rückschlagventil 31 geschlossen.

Als Ventil 31 kann auch ein schaltbares Ventil zum Einsatz kommen. Ein Rückschlagventil ist jedoch konstruktiv einfacher.

Der doppelwandigen Gasleitung 18 kann ein Drucksensor 32 zugeordnet sein, um den Druck in der doppelwandigen Gasleitung 18, speziell im Außenrohr 18b zu messen. Dies kann insbesondere dazu dienen, dass dann, wenn im Spülbetrieb die doppelwandige Gasleitung 18 sowohl im Innenrohr 18a als auch im Außenrohr 18b mit Inertgas befüllt wird, das erste Absperrventil 26 zu schließen und dann den Druck in der doppelwandigen Gasleitung 18 zu überwachen. Wird ein Druckabfall festgestellt, so kann auf eine Leckage an der doppelwandigen Gasleitung 18 geschlossen werden. Diese Funktionalität setzt als Ventil 31 ein schaltbares Ventil voraus. Ventil 31 muss vor Ventil 26 geschlossen werden. Druckabfall wird dann in 18b überwacht.

Obwohl in Fig. 1 und 2 die Spülluftzuleitung 23 und die Spülluftableitung 24 mit den beiden Absperrventilen 27 und 28 gezeigt sind, kann auf diese Baugruppen auch verzichtet werden. In diesem Fall kann dann im Gaskraftstoffbetrieb das Außenrohr 18b mit Inertgas gefüllt werden. Der Druck des Inertgases in dem Außenrohr 18b ist dann höher als der Druck des gasförmigen Brennstoffs im Innenrohr 18a. Hiermit kann durch Verzicht auf die Spülluftzuleitung 23 und die Spülluftableitung 24 ein besonders einfacher Aufbau des Gasversorgungssystems 10 gewährleistet werden. Das Außenrohr 18b ist dann permanent mit Inertgas befüllt. Dieses kann dann im Spülbetrieb, zum Beispiel beim Wechsel an einem Dual-Fuel-Motor vom Gaskraftstoffbetrieb in den Flüssigkraftstoffbetrieb, zum Spülen des Innenrohrs 18a genutzt werden.

Die Erfindung betrifft weiterhin Verfahren zum Betreiben eines Gasversorgungssystems 10, wobei vorgesehen ist, dass im Gaskraftstoffbetrieb das Absperrventil 26 geschlossen und im Spülbetrieb das Absperrventil 26 geöffnet ist. Sind die Spülluftzuleitung 23 und die Spülluftableitung 24 vorhanden, so sind im Gaskraftstoffbetrieb die Absperrventile 27 und 28 beide geöffnet und im Spülbetrieb sind die beiden jeweils geschlossen.

Dann, wenn im Spülbetrieb des Motors 11 im Motor kein gasförmiger Kraftstoff verbrannt wird und die beiden Gasabsperrventile 21 geschlossen sind, und wenn weiterhin die doppelwandige Gasleitung 18 durch Öffnen des Absperrventils 26 mit Inertgas befüllt wurde, kann das erste Absperrventil 26 geschlossen und dann der Druck in der doppelwandigen Gasleitung 18 mit einem Drucksensor 32 überwacht werden, wobei dann bei einer Druckänderung auf eine Leckage der doppelwandigen Gasleitung geschlossen wird.

### Bezugszeichenliste

- 10: Gasversorgungssystem
- 11: Motor
- 12: Maschinenraum
- 13: Zylinder
- 14: Abtrieb/Generator
- 15: Kupplung
- 16: Gasregelstation
- 17: Gasleitung
- 18: doppelwandige Gasleitung
- 18a: Innenrohr
- 18b: Außenrohr
- 19: gasregelstationsseitiges Ende
- 20: motorseitiges Ende
- 21: Gasabsperrventil
- 22: Druckregler
- 23: Spülluftzuleitung
- 24: Spülluftableitung
- 25: Inertgasspülleitung
- 26: Absperrventil
- 27: Absperrventil
- 28: Absperrventil
- 29: Entlüftungsventil
- 30: Entlüftungsleitung
- 31: Ventil
- 32: Drucksensor

## Patentansprüche

1. Gasversorgungssystem (10) eines Gasmotors oder Dual-Fuel-Motors (11),
mit einer Gasregelstation (16) zur Versorgung des Motors (11) in einem Gaskraftstoffbetrieb desselben mit einem gasförmigen Kraftstoff konstanten Gasdrucks in Abhängigkeit einer angeforderten Motorleistung,
mit einer sich von der Gasregelstation (16) zu Zylindern (13) des Motors (11) erstreckenden, doppelwandigen Gasleitung (18), die ein Innenrohr (18a) und ein das Innenrohr (18a) zumindest abschnittsweise umgebendes Außenrohr (18b) aufweist,
wobei sich im Bereich der Gasregelstation (16) zum gasregelstationsseitigen Ende (19) der doppelwandigen Gasleitung (18) eine Gasleitung (17) erstreckt, in die mindestens ein Gasabsperrventil (21) integriert ist, wobei diese Gasleitung (17) in das Innenrohr (18a) der doppelwandigen Gasleitung (18) übergeht oder dasselbe bereitstellt,
wobei im Bereich der Gasregelstation (16) von der Gasleitung (17) zwischen dem mindestens einen Gasabsperrventil (21) und dem gasregelstationsseitigen Ende (19) der doppelwandigen Gasleitung (18) mindestens eine Entlüftungsleitung (30) mit einem in die jeweilige Entlüftungsleitung (30) integrierten Entlüftungsventil (29) abzweigt,
wobei im Gaskraftstoffbetrieb das Innenrohr (18a) der doppelwandigen Gasleitung (18) ausgehend von einem gasregelstationsseitigen Ende (19) der doppelwandigen Gasleitung (18) in Richtung auf ein motorseitiges Ende (20) der doppelwandigen Gasleitung (18) von dem gasförmigen Kraftstoff durchströmbar ist,
mit einer Inertgasspülleitung (25) und einem der Inertgasspülleitung (25) zugeordneten ersten Absperrventil (26),
wobei in einem Spülbetrieb des Motors (11) bei geöffnetem ersten Absperrventil (26) über die Inertgasspülleitung (25) dem Außenrohr (18b) der doppelwandigen Gasleitung (18) an dem gasregelstationsseitigen Ende (19) der doppelwandigen Gasleitung (18) Inertgas zuführbar ist, welches durch das Außenrohr (18b) in Richtung auf das motorseitige Ende (20) der doppelwandigen Gasleitung (18) strömt, dort in das Innenrohr (18a) übertritt und über das Innenrohr (18a) zurück in Richtung auf das gasregelstationsseitigen Ende (19) der doppelwandigen Gasleitung (18) strömt, um dort aus derselben auszutreten, nämlich derart, dass bei geöffnetem Entlüftungsventil (29) und geschlossenem Gasabsperrventil (21) das am gasregelstationsseitigen Ende (19) aus der doppelwandigen Gasleitung (18) im Spülbetrieb des Motors (11) austretende Inertgas über die jeweilige Entlüftungsleitung (30) abführbar ist.

2. Gasversorgungssystem nach Anspruch 1, **dadurch gekennzeichnet, dass**
zur Versorgung des Motors (11) mit gasförmigem Kraftstoff das erste Absperrventil (26) geschlossen ist.

3. Gasversorgungssystem nach Anspruch 1 oder 2, **dadurch gekennzeichnet, dass**
an der doppelwandigen Gasleitung (18) ein Drucksensor (32) angreift, über den ein Druckabfall der mit Inertgas befüllten doppelwandigen Gasleitung (18) detektierbar ist.

4. Gasversorgungssystem nach einem der Ansprüche 1-3, **dadurch gekennzeichnet, dass**
am motorseitigen Ende (20) der doppelwandigen Gasleitung (18) ein Ventil (31) vorgesehen ist, welches im Spülbetrieb einen Übertritt des Inertgases vom Außenrohr (18b) der doppelwandigen Gasleitung (18) in das Innenrohr (18a) der doppelwandigen Gasleitung (18) zulässt.

5. Gasversorgungssystem nach einem der Ansprüche 1-4, **gekennzeichnet durch,**
das Außenrohr (18b) der doppelwandigen Gasleitung (18) im Gaskraftstoffbetrieb des Motors zur Abführung einer Gasleckage in Richtung auf die Gasregelstation (16) von Spülluft durchströmbar ist, wobei die Spülluft dem Außenrohr (18b) an dem motorseitigen Ende (20) der doppelwandigen Gasleitung (18) über eine Spülluftzuleitung (23) zuführbar ist, und wobei die Spülluft vom Außenrohr (18b) an dem gasregelstationsseitigen Ende (19) der doppelwandigen Gasleitung (18) über eine Spülluftableitung (24) abführbar ist,
ein der Spülluftzuleitung (23) zugeordnetes zweites Absperrventil (27) und mit ein der Spülluftableitung (24) zugeordnetes drittes Absperrventil (28), wobei das zweite und dritte Absperrventil (27, 28) im Spülbetrieb des Motors (11) geschlossen und im Gaskraftstoffbetrieb des Motors (11) geöffnet sind.

6. Verfahren zum Betreiben eines Gasversorgungssystems nach einem der Ansprüche 1-5, **dadurch gekennzeichnet, dass** dann, wenn im Gaskraftstoffbetrieb des Motors (11) im Motor gasförmiger Kraftstoff verbrannt wird, das erste Absperrventil (26) geschlossen ist und das gegebenenfalls vorhandene zweite und dritte Absperrventil (27, 28) geöffnet sind.

7. Verfahren zum Betreiben eines Gasversorgungssystems nach einem der Ansprüche 1-5 oder Verfahren nach Anspruch 6, **dadurch gekennzeichnet, dass** dann, wenn im Spülbetrieb des Motors (11) im Motor kein gasförmiger Kraftstoff verbrannt wird, insbesondere bei einen Dual-Fuel-Motor zum Übergang in einen Flüssigkraftstoffbetrieb des Motors, das erste Absperrventil (26) geöffnet ist und das gegebenenfalls vorhandene zweite und dritte Absperrventil (27, 28) geschlossen sind.

8. Verfahren zum Betreiben eines Gasversorgungssystems nach Anspruch 3 oder Verfahren nach Anspruch 6 oder 7, **dadurch gekennzeichnet, dass** dann, wenn im Spülbetrieb des Motors (11) im Motor kein gasförmiger Kraftstoff verbrannt wird, insbesondere bei einen Dual-Fuel-Motor zum Übergang in einen Flüssigkraftstoffbetrieb des Motors, die doppelwandige Gasleitung mit Inertgas befüllt wurde, dann das erste Absperrventil (26) geschlossen wird, und dann über den Drucksensor (32) der Druck in der doppelwandigen Gasleitung (18) überwacht wird.

## Claims

1. A gas supply system (10) of a gas engine or dual fuel engine (11),
having a gas regulating station (16) for supplying the engine (11) in a gas fuel mode of the same with a gaseous fuel of constant gas pressure dependent on a requested engine output,
having a double-walled gas line (18) extending from the gas regulating station (16) to cylinders (13) of the engine (11), which comprises an inner pipe (18a) and an outer pipe (18b) surrounding the inner pipe (18a) at least in sections,
wherein in the region of the gas regulating station (16) a gas line (17) extends to the gas regulating station-side end (19) of the double-walled gas line (18), which is integrated in the at least one gas shut-off valve (21), wherein this gas line (17) merges into the inner pipe (18a) of the double-walled gas line (18) or provides the same,
wherein in the region of the gas regulating station (16) at least one vent line (30) with a vent valve (29) integrated in the respective vent line (30) branches off the gas line (17) between the at least one gas shut-off valve (21) and the gas regulating station-side end (19) of the double-walled gas line (18),
wherein in the gas fuel mode the inner pipe (18a) of the double-walled gas line (18), emanating from a gas regulating station-side end (19) of the double-walled gas line (18) can be flowed through by the gaseous fuel in the direction of an engine-side end (20)of the double-walled gas line (18),
having an inert gas purging line (25) and a first shut-off valve (26) assigned to the inert gas purging line (25),
wherein in a purging mode of the engine (11) with opened first shut-off valve (26), inert gas can be supplied via the inert gas purging line (25) to the outer pipe (18b) of the double-walled gas line (18) on the gas regulating station-side end (19) of the double-walled gas line (18), which flows through the outer pipe (18b) in the direction of the engine-side end (20) of the double-walled gas line (18), there passes into the inner pipe (18a) and via the inner pipe (18a) flows back in the direction of the gas regulating station-side end (19) of the double-walled gas line (18), in order to exit from the same, namely in such a manner that with opened vent valve (29) and closed gas shut-off valve (21) the inert gas exiting at the gas regulating station-side end (19) from the double-walled gas line (18) in the purging mode of the engine (11), can be discharged via the respective vent line (30).

2. The gas supply system according to Claim 1,
**characterised in that**
for supplying the engine (11) with gaseous fuel the first shut-off valve (26) is closed.

3. The gas supply system according to Claim 1 or 2,
**characterised in that**
a pressure sensor (32) acts on the double-walled gas line (18) via which a pressure drop of the double-walled gas line (18) filled with inert gas is detectable.

4. The gas supply system according to any one of the Claims 1-3,
**characterised in that**
at the engine-side end (20) of the double-walled gas line (18) a valve (31) is provided, which in the purging mode allows the inert gas from the outer pipe (18b) of the double-walled gas line (18) to pass into the inner pipe (18a) of the double-walled gas line (18).

5. The gas supply system according to any one of the Claims 1-4,
**characterised by**
the outer pipe (18b) of the double-walled gas line (18) in the gas fuel mode of the engine for discharging a gas leakage in the direction of the gas regulating station (16) can be flowed through by purging air, wherein the purging air can be supplied to the outer pipe (18b) at the engine side-end (20) of the double-walled gas line (18) via a purging air supply line (23), and wherein the purging air can be discharged from the outer pipe (18b) at the gas regulating station-side end (19) of the double-walled gas line (18) via a purging air discharge line (24),
a second shut-off valve (27) assigned to the purging air supply line (23) and a third shut-off valve (28) assigned to the purging air discharge line (24), wherein the second and third shut-off valve (27, 28) are closed in the purging mode of the engine (11) and opened in the gas fuel mode of the engine (11).

6. A method for operating a gas supply system according to any one of the Claims 1-5,
**characterised in that**
in particular when in the gas fuel mode of the engine (11) gaseous fuel is combusted in the engine, the first shut-off valve (26) is closed and the second and third shut-off valve (27, 28), if any, are opened.

7. The method for operating a gas supply system according to Claims 1-5 or method according to Claim 6,
**characterised in that**
in particular when in the purging mode of the engine (11) no gaseous fuel is combusted in the engine, in particular with a dual fuel engine for the transition into a liquid fuel mode of the engine, the first shut-off valve (26) is opened and the second and third shut-off valve (27, 28), if any, are closed.

8. The method for operating a gas supply system according to Claim 3 or method according to Claim 6 or 7,
**characterised in that**
in particular when in the purging mode of the engine (11) no gaseous fuel is combusted in the engine, in particular with a dual fuel engine for the transition into a liquid fuel mode of the engine, the double-walled gas line was filled with inert gas, the first shut-off valve (26) is then closed and the pressure in the double-walled gas line (18) is then monitored via the pressure sensor (32).

## Revendications

1. Système d'alimentation en gaz (10) d'un moteur à gaz ou d'un moteur bicarburant (11),
comportant une station de régulation de gaz (16) pour alimenter le moteur (11) dans un fonctionnement au carburant gazeux de celui-ci avec une pression de gaz constante de carburant gazeux en fonction de la puissance moteur demandée,
comportant une conduite de gaz à double paroi (18) s'étendant de la station de régulation de gaz (16) aux cylindres (13) du moteur (11), qui présente un tube intérieur (18a) et un tube extérieur (18b) entourant le tube intérieur (18a) au moins par sections,
dans lequel dans la zone de la station de régulation de gaz (16) une conduite de gaz (17) s'étend jusqu'à l'extrémité côté station de régulation de gaz (19) de la conduite de gaz à double paroi (18), dans laquelle au moins une vanne d'arrêt de gaz (21) est intégrée, dans lequel cette conduite de gaz (17) passe dans le tuyau intérieur (18a) de la conduite de gaz à double paroi (18) ou fournit celui-ci,
dans lequel dans la zone de la station de régulation de gaz (16) de la conduite de gaz (17) entre la au moins une vanne d'arrêt de gaz (21) et l'extrémité côté station de régulation de gaz (19) de la conduite de gaz à double paroi (18) au moins une conduite d'aération (30) comportant une soupape d'aération (29) intégrée dans la conduite d'aération (30) respective se ramifie, dans lequel, lors du fonctionnement au carburant gazeux, le tuyau intérieur (18a) de la conduite de gaz à double paroi (18) peut être traversé par le carburant gazeux depuis une extrémité côté station de régulation de gaz (19) de la conduite de gaz à double paroi (18) en direction d'une extrémité côté moteur (20) de la conduite de gaz à double paroi (18),
comportant une conduite de purge de gaz inerte (25) et une première vanne d'arrêt (26) associée à la conduite de purge de gaz inerte (25),
dans lequel, lors d'une mode de purge du moteur (11) lorsque la première vanne d'arrêt (26) est ouverte via la conduite de purge de gaz inerte (25) du gaz inerte peut être alimenté vers le tuyau extérieur (18b) de la conduite de gaz à double paroi (18) à l'extrémité côté poste de régulation de gaz (19) de la conduite de gaz à double paroi (18), qui s'écoule à travers le tuyau extérieur (18b) en direction de l'extrémité côté moteur (20) de la conduite de gaz à double paroi (18), pénètre à cet endroit dans le tuyau intérieur (18a) et s'écoule via le tuyau intérieur (18a) en retour en direction de l'extrémité côté station de régulation de gaz (19) de la conduite de gaz à double paroi (18) pour en sortir, à savoir de telle manière que lorsque la soupape de ventilation (29) est ouverte et la soupape d'arrêt de gaz (21) est fermée, le gaz inerte sortant de la conduite de gaz à double paroi (18) à l'extrémité du poste de régulation de gaz (19) pendant le mode de purge du moteur (11) peut être évacué via la conduite d'aération (30) respective.

2. Système d'alimentation en gaz selon la revendication 1, **caractérisé en ce que** pour alimenter le moteur (11) en carburant gazeux, la première vanne d'arrêt (26) est fermée.

3. Système d'alimentation en gaz selon la revendication 1 ou 2, **caractérisé en ce qu'**un capteur de pression (32) est fixé à la conduite de gaz à double paroi (18), par l'intermédiaire duquel une chute de pression dans la conduite de gaz à double paroi (18) remplie de gaz inerte peut être détectée.

4. Système d'alimentation en gaz selon une des revendications 1 à 3, **caractérisé en ce qu'**à l'extrémité côté moteur (20) de la conduite de gaz à double paroi (18) se trouve une vanne (31) qui, pendant le mode de purge, permet au gaz inerte de passer du tuyau extérieur (18b) de la conduite de gaz à double paroi (18) dans le tuyau intérieur (18a) de la conduite de gaz à double paroi (18).

5. Système d'alimentation en gaz selon une des revendications 1 à 4, **caractérisé par**
le tube extérieur (18b) de la conduite de gaz à double paroi (18) lors du fonctionnement au gaz du moteur pour évacuer une fuite de gaz dans la direction de la station de régulation de gaz (16) peut être traversée par de l'air de purge, dans lequel l'air de purge peut être acheminé vers le tuyau extérieur (18b) à l'extrémité côté moteur (20) de la conduite de gaz à double paroi (18) via une conduite d'alimentation en air de purge (23) et l'air de purge peut être évacué du tuyau extérieur (18b) à l'extrémité côté station de régulation de gaz (19) de la conduite de gaz à double paroi (18) via une conduite d'évacuation d'air de purge (24),
une deuxième vanne d'arrêt (27) associée à la conduite d'alimentation en air de purge (23) et une troisième vanne d'arrêt (28) associée à la conduite de refoulement d'air de purge (24), dans lequel la deuxième et troisième vanne d'arrêt (27, 28) sont fermées pendant le mode de purge du moteur (11) et ouvertes dans un fonctionnement au carburant gazeux du moteur (11).

6. Procédé de fonctionnement d'un système d'alimentation en gaz selon une des revendications 1 à 5, **caractérisé en ce que** lorsque du carburant gazeux est brûlé dans le moteur pendant le fonctionnement au carburant gazeux (11), la première vanne d'arrêt (26) est fermée et les deuxième et troisième vannes d'arrêt (27, 28), si présentes, sont ouvertes.

7. Procédé de fonctionnement d'un système d'alimentation en gaz selon une des revendications 1 à 5 ou procédé selon la revendication 6, **caractérisé en ce que**, en mode de purge du moteur (11), aucun carburant gazeux n'est brûlé, en particulier dans un système bicarburant pour passer à un fonctionnement du moteur au carburant liquide, la première vanne d'arrêt (26) est ouverte et les deuxième et troisième vannes d'arrêt (27, 28), si présentes, sont fermées.

8. Procédé de fonctionnement d'un système d'alimentation en gaz selon la revendication 3 ou procédé selon la revendication 6 ou 7, **caractérisé en ce que**, pendant le mode de purge du moteur (11), aucun carburant gazeux n'est brûlé, en particulier dans un système bicarburant pour passer au fonctionnement du moteur au carburant liquide, la conduite de gaz à double paroi est remplie de gaz inerte, puis la première vanne d'arrêt (26) est fermée, puis la pression dans la conduite de gaz à double paroi (18) est surveillée via le capteur de pression (32).
